# FASCICULE DE BREVET EUROPEEN

(11) **EP 2 962 242 B1**
(45) Date de publication et mention de la délivrance du brevet: **02.05.2018**
(21) Numéro de dépôt: 14713207.0
(22) Date de dépôt: 03.03.2014
(51) Int. Cl.: G06F 21/55, H04L 29/06, G06F 9/455

(54) **PROCEDE DE DETECTION D'ATTAQUES DE MACHINES VIRTUELLES**
VERFAHREN ZUR ERKENNUNG VON ATTACKEN VIRTUELLEN MASCHINE
VIRTUAL MACHINES ATTACK DETECTION PROCESS

(30) Priorité: 01.03.2013 FR 1351866
(43) Date de publication de la demande: 06.01.2016
(73) Titulaire: Orange, 75015 Paris (FR)
(72) Inventeur: LAZRI, Kahina, F-14000 Caen (FR); LANIEPCE, Sylvie, F-14000 Caen (FR)
(86) Numéro de dépôt international: PCT/FR2014/050458
(87) Numéro de publication internationale: WO 2014/132009

(56) Documents cités:
- US-A1- 2009 044 265
- SEBASTIAN ROS ET AL: "Intrusion Detection in the Cloud", 2009 EIGHTH IEEE INTERNATIONAL CONFERENCE ON DEPENDABLE, AUTONOMIC AND SECURE COMPUTING, 1 décembre 2009 (2009-12-01), pages 729-734, XP055011860, DOI: 10.1109/DASC.2009.94 ISBN: 978-0-76-953929-4
- FATEMEH AZMANDIAN ET AL: "Virtual machine monitor-based lightweight intrusion detection", ACM SIGOPS OPERATING SYSTEMS REVIEW, vol. 45, no. 2, 18 juillet 2011 (2011-07-18), page 38, XP055101403, ISSN: 0163-5980, DOI: 10.1145/2007183.2007189
- AMIR VAHID DASTJERDI ET AL: "Distributed Intrusion Detection in Clouds Using Mobile Agents", ADVANCED ENGINEERING COMPUTING AND APPLICATIONS IN SCIENCES, 2009. ADVCOMP '09. THIRD INTERNATIONAL CONFERENCE ON, IEEE, PISCATAWAY, NJ, USA, 11 octobre 2009 (2009-10-11), pages 175-180, XP031584634, ISBN: 978-1-4244-5082-4

## Description

La présente invention concerne un procédé de détection d'attaques dans un environnement informatique virtualisé, c'est-à-dire rendu virtuel.

Elle trouve une application particulièrement intéressante dans la sécurisation des systèmes informatiques dont l'architecture est basée sur des ressources informatiques dématérialisées, mises à disposition d'un grand nombre d'utilisateurs qui y accèdent à distance et de manière évolutive dans le temps, c'est-à-dire à la demande. Une telle architecture est plus connue sous le nom d'architecture en « cloud computing », ou architecture « d'informatique dans le nuage ».

Le concept de cloud computing désigne des architectures informatiques dans lesquelles des traitements informatiques traditionnellement localisés sur des postes clients d'utilisateurs d'une entreprise, ou sur des serveurs de l'entreprise sont déportés sur des serveurs distants. Des ressources matérielles distantes, réparties à travers le monde, sont ainsi accédées à la demande via internet pour créer des services accessibles en ligne par les utilisateurs. Les applications et les données ne se trouvent plus sur l'ordinateur local de l'utilisateur, ou sur le serveur situé dans l'entreprise de cet utilisateur, mais dans un nuage composé d'un certain nombre de serveurs distants interconnectés.

Une architecture en cloud computing s'appuie sur une dématérialisation basée sur une virtualisation de ressources physiques. La virtualisation consiste à faire fonctionner sur un seul ordinateur, ou serveur hôte, plusieurs systèmes d'exploitation, comme s'ils fonctionnaient sur des ordinateurs distincts. Des environnements virtuels appelés machines virtuelles, sont ainsi offerts aux utilisateurs. La virtualisation permet d'accroître la performance d'une infrastructure en optimisant au maximum l'utilisation des ressources de l'infrastructure. Elle génère en outre une économie importante par mutualisation des ressources et des activités.

Des architectures en cloud computing sont proposées à des clients avec des garanties de service et de disponibilité négociées par contrat et moyennant une tarification adaptée aux ressources qui sont allouées. Dans le but de maximiser l'utilisation des capacités en ressources et par la même de maximiser la performance économique des offres de cloud computing, les ressources sont généralement sur-engagées. Ainsi, la quantité totale de ressources configurées pour l'ensemble des machines virtuelles présentes sur un serveur hôte est supérieure à celle réellement disponible sur cet hôte. En effet, on estime que la plupart du temps, chacune des machines virtuelles ne cherche pas à consommer la totalité des ressources configurées, ou en tout cas, pas au même moment que les autres machines virtuelles co-localisées sur le même serveur hôte.

Afin d'offrir aux clients à tout moment l'accès à des ressources conformément aux termes du contrat qu'ils ont négocié, des mécanismes de gestion de contention des ressources sont mis en place. Ils permettent d'équilibrer l'utilisation des ressources en temps réel sur un serveur hôte, voire sur un ensemble de serveurs hôtes.

Par exemple, lors d'une montée en charge d'une machine virtuelle hébergée par un serveur hôte qui, lors de cette montée en charge atteint sa limite de capacité, la priorité de cette machine virtuelle est évaluée par rapport à d'autres machines virtuelles co-localisées sur le même serveur hôte afin de lui allouer des ressources supplémentaires. Une telle allocation de ressources supplémentaires peut consister à mettre en oeuvre un partage de mémoire : des pages identiques utilisées par plusieurs machines virtuelles sont mutualisées. De l'espace mémoire est ainsi récupéré et mis à disposition de machines virtuelles qui ont besoin de plus de ressources. Un tel mécanisme est particulièrement intéressant lorsqu'un même système d'exploitation ou de mêmes applications sont installé(es) sur plusieurs machines virtuelles. Un mécanisme de gonflage de la mémoire peut également être mis en oeuvre : des pages mémoire sont ainsi récupérées par un pilote de gonflage activé par une couche de virtualisation, en exerçant une pression de mémoire sur le système d'exploitation d'une machine virtuelle. Ainsi, lorsque le système d'exploitation de la machine virtuelle est sous contrainte de ressources du fait de la pression exercée par le pilote, le système d'exploitation active ses propres algorithmes de gestion de la mémoire et en particulier, si nécessaire, permute des pages mémoire vers son propre espace disque. Ce mécanisme de permutation de pages mémoire est plus connu sous le terme de mémoire virtuelle, ou « swap mémoire », ou encore « mémoire swap ». Une allocation de ressources supplémentaires peut également consister à déplacer la machine virtuelle concernée vers un autre serveur hôte qui dispose de ressources suffisantes, ou à déplacer des machines localisées sur le même serveur hôte que cette machine virtuelle vers un autre serveur hôte afin qu'elle dispose de plus de ressources, ou encore à dupliquer la machine virtuelle sur plusieurs serveurs hôtes de manière à répondre aux besoins de ressources accrus.

Cependant, ces mécanismes de gestion de contention des ressources, mis en oeuvre pour faire face à une demande de ressource supplémentaire en provenance d'une première machine virtuelle, peuvent impacter une ou plusieurs autres machines virtuelles. Par exemple, lorsque le mécanisme de gonflage de la mémoire est mis en oeuvre sur une machine virtuelle, celle-ci peut voir les performances d'accès à sa mémoire dégradées. Dans le cas d'une migration d'une machine virtuelle depuis un serveur hôte source vers un serveur hôte destination, la machine virtuelle migrée peut souffrir d'une dégradation des performances pouvant varier en fonction de la charge du serveur hôte source et/ou du serveur hôte destination, en fonction de la charge de la machine virtuelle et de la nature des applications qu'elle exécute. Lors de la migration, la machine virtuelle peut, dans le pire des cas, souffrir d'une perte de connectivité ponctuelle inacceptable (le terme utilisé habituellement pour désigner cette perte de connectivité est le terme anglais « down time »).

Ainsi, la mise en oeuvre de mécanismes de gestion de contention des ressources au niveau d'une machine virtuelle pour satisfaire les besoins accrus en ressources d'une autre machine virtuelle peut avoir un impact non négligeable sur la machine virtuelle. Ce défaut d'isolation d'une machine virtuelle par rapport à des événements survenus au niveau d'une autre machine virtuelle constitue un nouveau type de vulnérabilité de sécurité. En effet, des personnes malintentionnées peuvent provoquer intentionnellement des variations au niveau de premières machines virtuelles, telles que des demandes de ressources supplémentaires avec des fluctuations considérables et périodiques, afin de déclencher des mécanismes de gestion de contention des ressources produisant leurs effets au niveau d'autres machines virtuelles. Cela constitue une nouvelle forme d'attaque qui n'est pour l'instant pas détectée en tant que telle. En effet, la détection d'attaques s'intéresse généralement à un espace de ressources manipulé directement par un attaquant : l'attaquant manipule et attaque les ressources de cet espace et les méthodes connues de détection d'attaque ne s'intéressent qu'à cet espace de ressources. On connaît par exemple le document « Intrusion Détection in the Cloud », Sebastien Ross et Al., 2009 Eigth IEEE International Conference On Depdendable, Autonomic And Secure Coputing, 1 décembre 2009, et le document « Distributed Intrusion Detection in Clouds Using Mobile Agents », Amir Vahid Dastjerdi et Al. Advanced Engineering Computing And Applications In Sciences, 2009 qui décrivent des méthodes de détection d'attaques dans un environnement en cloud computing basées sur une corrélation d'informations collectées sur différentes machines virtuelles de l'architecture afin de détecter qu'une attaque vise ces machines.

Ainsi, aucune attaque n'est détectée sur des machines co-localisées sur le serveur hôte qui ne font pas partie de cet espace. Avec ce nouveau type d'attaque, l'effet néfaste est obtenu en quelques sortes par effet de bord. Les mécanismes de détection d'attaques actuels sont inadaptés pour détecter et analyser ce nouveau type d'attaque.

Un des buts de l'invention est de remédier à des insuffisances/inconvénients de l'état de la technique et/ou d'y apporter des améliorations.

A cette fin, l'invention propose un procédé de détection d'attaques d'au moins une machine virtuelle dans un système comprenant au moins un serveur hôte hébergeant un ensemble de machines virtuelles, le procédé comprenant les étapes de :
- réception d'une alerte représentative d'une dégradation des performances au niveau d'une machine virtuelle,
- vérification qu'un mécanisme de gestion de contention des ressources a été mis en oeuvre pour la machine virtuelle,
- détection, sur un intervalle de temps donné, d'au moins une corrélation temporelle entre la dégradation des performances survenue sur la machine virtuelle et une variation d'utilisation par au moins une autre machine virtuelle, d'au moins une ressource du serveur hôte, des données représentatives de l'utilisation des ressources étant collectées à intervalles réguliers.

Le procédé selon l'invention s'intéresse à un nouveau type de vulnérabilité, lié à la mise en oeuvre de mécanismes de gestion de contention des ressources dans un environnement en cloud computing ; il propose un procédé de détection d'attaques lié à ce type de vulnérabilité. En effet, on constate qu'un tel mécanisme de gestion de contention des ressources, lorsqu'il est mis en oeuvre, peut provoquer une dégradation des performances au niveau d'une ou de plusieurs machines virtuelles. Ainsi, une personne malintentionnée qui provoque la mise en oeuvre de tels mécanismes en influant de manière contrôlée sur certaines machines virtuelles, peut induire sur une ou plusieurs machines virtuelles co-localisées sur le même serveur hôte un effet néfaste assimilé à une attaque. Pour ce faire, la personne malintentionnée peut prendre le contrôle de machines virtuelles ou manipuler ses propres machines virtuelles. L'attaque peut être qualifiée de globale car elle vise à nuire à l'architecture dans son ensemble, sans viser une machine virtuelle particulière.

Le procédé de l'invention prend en compte un contexte d'exécution de la machine virtuelle dans son environnement. Sur détection d'une dégradation des performances sur la machine virtuelle, il est vérifié si l'hyperviseur a mis en oeuvre au niveau du serveur hôte un mécanisme de gestion de contention des ressources qui a impacté la machine virtuelle. Si c'est le cas, il est recherché à partir d'informations représentatives de l'utilisation des ressources du serveur hôte par les machines virtuelles de l'environnement, des corrélations temporelles entre la dégradation survenue sur la machine virtuelle, et des variations d'utilisation de ressources sur d'autres machines virtuelles. Ces corrélations temporelles sont représentatives d'une cause et d'un effet associé.

Ainsi, contrairement à des méthodes connues qui cherchent à détecter une attaque au niveau de machines cible, ou machines victimes de l'attaque, le procédé de l'invention cherche à identifier les attaques au niveau des machines virtuelles manipulées, qui sont différentes des machines cible qui subissent le préjudice de l'attaque. Il est en général plus facile de détecter une attaque au niveau de la machine cible et il est plus facile également de superviser et juguler l'attaque sur une machine cible. Dans le cas des nouvelles vulnérabilités visées par le procédé de l'invention, l'attaque cherche à nuire à l'architecture dans son ensemble, aucune machine virtuelle en particulier n'est visée. Les procédés habituels de détection sont donc plus difficilement applicables.

Par ailleurs, le procédé de l'invention peut être qualifié de léger en termes d'impact sur l'architecture. En effet, la détection de corrélations temporelles ne se fait qu'après avoir observé une dégradation des performances au niveau d'une machine virtuelle et après s'être assuré qu'un mécanisme de gestion de contention des ressources a été activé pour la machine virtuelle. Ainsi, les étapes du procédé ne sont mises en oeuvre qu'après observation d'une série d'événements. Le procédé n'est donc pas actif en continu et ne vient pas perturber en termes de performances, les activités de l'architecture. En outre, la détection d'attaques est mise en oeuvre localement, au niveau d'un serveur hôte. La quantité de données à analyser reste donc à l'échelle du serveur hôte et est donc indépendante du nombre de serveurs hôtes qui constituent l'architecture.

Le procédé de l'invention est déclenché par réception d'une alerte de petite taille. L'entité de gestion de la sécurité en charge de l'étape de détection de corrélations temporelles confronte les données de l'alerte avec des données habituellement disponibles au niveau du serveur hôte, dans le cadre des activités de supervision du serveur hôte. Ainsi, la machine de gestion de la sécurité dispose de toutes les informations nécessaires pour mener à bien la détection de corrélations temporelles. Le procédé de l'invention n'induit donc aucune transmission de données supplémentaires et n'impacte donc pas les performances de l'architecture en termes de bande passante.

Avantageusement, le procédé comprend en outre une étape d'analyse de l'utilisation des ressources du serveur hôte par ladite autre machine virtuelle pendant l'intervalle de temps donné, ladite analyse étant destinée à confirmer que l'autre machine virtuelle est à l'origine de la dégradation des performances au niveau de la machine virtuelle.

Le procédé de l'invention comprend par ailleurs une étape d'analyse qui permet d'analyser en détail le comportement malveillant de machines virtuelles. Une telle analyse permet de dresser un profil de comportement malveillant qui implique une ou plusieurs machines virtuelles. Ainsi, il est possible d'identifier un comportement récurrent, qui dépasse le cadre de l'analyse faite sur l'intervalle de temps donné, et de mieux comprendre l'attaque. Selon un autre exemple, il est possible d'identifier que plusieurs machines coopèrent pour perpétrer une attaque.

Une telle analyse permet, à partir de données ponctuelles, obtenues sur un intervalle de temps donné, d'analyser une attaque de façon globale.

Dans un exemple de réalisation, le mécanisme de gestion de contention des ressources appartient au groupe comprenant : un gonflage mémoire de la machine virtuelle par un pilote activé au niveau de la machine virtuelle par un hyperviseur du serveur hôte, une compression de pages mémoires de la machine virtuelle, un déplacement d'au moins une page mémoire de la machine virtuelle vers des zones mémoire de l'hyperviseur, une migration de la machine virtuelle sur un deuxième serveur hôte.

Les mécanismes identifiés dans cet ensemble ont en commun qu'ils sont susceptibles de provoquer une dégradation des performances d'une machine virtuelle.

De façon avantageuse, lorsque l'alerte est consécutive à la migration de la machine virtuelle sur un deuxième serveur hôte, le procédé comprend en outre les étapes de :
- réception de l'alerte émise par la machine virtuelle migrée par une deuxième machine virtuelle de sécurité, comprise sur le deuxième serveur hôte,
- envoi par la deuxième machine virtuelle de sécurité de ladite alerte à la machine virtuelle de sécurité du serveur hôte depuis lequel la machine virtuelle a migré.

Le procédé de l'invention, décrit principalement dans son application à une architecture qui comprend un serveur hôte unique trouve une application également dans une architecture de type cluster qui comprend une pluralité de serveurs hôtes. Dans cette architecture plus complexe, le procédé de l'invention ne nécessite aucune centralisation de l'activité de détection puisque celle-ci reste mise en oeuvre sur le serveur hôte qui héberge la machine virtuelle sur laquelle est perçue la dégradation des performances qui constitue l'effet néfaste de l'attaque. En effet, dans le cas où la dégradation résulte de la migration de la machine virtuelle d'un serveur hôte source vers un serveur hôte destination, l'alerte émise par la machine virtuelle est retransmise à l'entité de gestion de la sécurité du serveur hôte source afin d'étudier cette alerte dans son environnement d'origine.

L'invention concerne aussi l'utilisation du procédé selon l'invention pour détecter une incompatibilité entre un profil de consommation des ressources de la première machine virtuelle avec un profil de consommation des ressources d'une deuxième machine virtuelle hébergée par le serveur hôte.

L'invention trouve une application intéressante dans le placement de machines virtuelles dans une architecture en cloud computing en détectant une incompatibilité entre des profils de consommation des ressources de différentes machines virtuelles. La détection de cette incompatibilité permet à un fournisseur de l'architecture d'optimiser le placement des machines virtuelles et d'éviter ainsi des baisses de performances.

L'invention porte également sur une entité de gestion de la sécurité résidant dans une couche virtuelle sur un serveur hôte, l'entité de gestion de la sécurité comprenant :
- des moyens de réception, agencés pour recevoir d'une machine virtuelle de la couche virtuelle une alerte représentative d'une dégradation des performances de ladite machine,
- des moyens de vérification, agencés pour vérifier qu'un mécanisme de gestion de contention des ressources a été mis en oeuvre pour la machine virtuelle,
- des moyens de détection, agencés pour détecter, sur un intervalle de temps donné, au moins une corrélation temporelle entre la dégradation des performances survenue sur la machine virtuelle et une variation d'utilisation par au moins une autre machine virtuelle de la couche virtuelle, d'au moins une ressource du serveur hôte, des données représentatives de l'utilisation des ressources étant collectées à intervalles réguliers.

L'invention concerne aussi un système de détection d'attaques comprenant :
- un serveur hôte hébergeant un ensemble de machines virtuelles, et
- une entité de gestion de la sécurité selon l'invention.

L'invention concerne également un programme d'ordinateur sur un support de données et chargeable dans la mémoire d'un ordinateur, le programme comprenant des portions de code pour l'exécution des étapes du procédé de détection d'attaques selon l'invention lorsque le programme est exécuté sur ledit ordinateur.

L'invention porte aussi sur un support de données dans lequel est enregistré le programme selon l'invention.

D'autres caractéristiques et avantages de la présente invention seront mieux compris de la description et des dessins annexés parmi lesquels :
- la figure 1 est une représentation schématique d'une architecture en cloud computing, selon un exemple de réalisation de l'invention, dans laquelle le procédé de l'invention est mis en oeuvre ;
- la figure 2 présente les étapes d'un procédé de détection d'attaques dans un environnement en cloud computing, selon un exemple de réalisation de l'invention ;
- la figure 3 est un schéma bloc fonctionnel d'une entité de gestion de la sécurité adaptée pour détecter des attaques, selon un exemple de réalisation de l'invention.

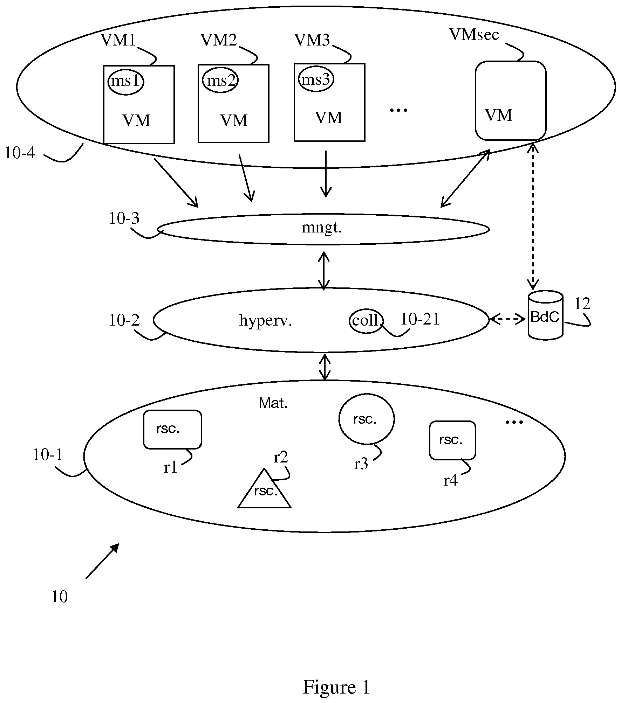

Un modèle d'architecture adapté pour la mise en oeuvre d'un procédé de détection d'attaques, selon un premier exemple de réalisation va maintenant être décrit en relation avec la figure 1.

De manière connue, une architecture d'informatique dans le nuage (on parle habituellement d'architecture en « cloud computing »), est conforme à un modèle qui comprend plusieurs couches d'exécution. Différents modèles existent. L'architecture décrite en relation avec la figure 1 présente un exemple de modèle d'architecture pour un serveur hôte 10. Le serveur hôte 10 comprend ainsi une première couche d'exécution, ou couche d'exécution matérielle 10-1. Cette couche d'exécution matérielle 10-1 comprend un ensemble de ressources matérielles r1, r2, r3, r4, etc. du serveur hôte 10. Une ressource matérielle correspond par exemple à de la mémoire, à une interface réseau, à un micro-processeur, etc. Une deuxième couche d'exécution est une couche de virtualisation 10-2. La couche de virtualisation 10-2 est adaptée pour présenter à des systèmes d'exploitation de machines virtuelles VM1, VM2, VM3, VMsec, etc., d'une couche virtuelle 10-4, un espace de ressources virtuelles, construit à partir d'un espace de ressources physiques du serveur hôte 10, en l'espèce l'espace des ressources r1, r2, r3, r4, etc. de la couche d'exécution matérielle 10-1. La couche de virtualisation 10-2 est mise en oeuvre par un hyperviseur qui gère l'allocation des ressources physiques entre différentes instances de machines virtuelles. Dans la suite de la description, on désignera la couche de virtualisation par le terme « hyperviseur ». Une troisième couche d'exécution est une couche de gestion 10-3 de l'architecture. La couche de gestion 10-3 est adaptée pour la création, l'instanciation, la libération, le placement des machines virtuelles VM1, VM2, VM3, VMsec, etc. exécutées de manière concurrente sur une même machine physique, ici le serveur hôte 10. La couche de gestion 10-3 représente une interface entre l'hyperviseur 10-2 et d'autres entités telles que la couche virtuelle 10-4, des outils de supervision de l'architecture (non représentés sur la figure 1), etc. Enfin, une quatrième couche d'exécution est la couche virtuelle 10-4. Les ressources associées à cette couche sont les machines virtuelles VM1, VM2, VM3, VMsec, etc. qui s'exécutent dans l'environnement virtuel mis à disposition par le serveur hôte 10 en tant que machine physique. Les machines virtuelles sont par exemple des machines virtuelles utilisateurs qui peuvent comprendre des données ou du code sensibles à protéger. Elles peuvent également être des machines virtuelles de sécurité, dédiées à la sécurité et destinées à protéger les machines virtuelles utilisateurs. Le serveur hôte 10, conforme au modèle d'architecture décrit précédemment héberge ainsi des machines virtuelles utilisateurs VM1, VM2, VM3, etc., et une entité de gestion de la sécurité VMsec. Chaque machine virtuelle VM1, VM2, VM3, etc., comprend un module de supervision des performances d'applications ms1, ms2, ms3, etc. Le module de supervision ms1, ms2, ms3, etc. est un module logiciel qui s'exécute sur la machine virtuelle VM1, VM2, VM3, etc., et qui est adapté pour superviser les performances des applications qui s'exécutent sur la machine virtuelle VM1, VM2, VM3, etc. En particulier, le module de supervision des performances ms1, ms2, ms3, etc., est adapté pour émettre une alerte à l'attention de l'entité de gestion de la sécurité VMsec en cas d'observation d'une dégradation des performances d'une des applications qui s'exécutent sur la machine virtuelle VM1, VM2, VM3, etc. La dégradation des performances peut être ressentie de différentes façons : un temps de réponse d'une application qui s'accroît, une diminution de la bande passante réseau, une diminution du nombre d'instructions exécutées par seconde, etc. Elle se mesure par exemple par rapport à un taux de disponibilité des ressources négocié par contrat entre un client et un fournisseur de solution de cloud (le client et le fournisseur ne sont pas représentés sur la figure 1) qui met à disposition du client l'environnement virtuel hébergé par le serveur hôte 10. Selon l'invention, une dégradation des performances perçue au niveau d'une machine virtuelle constitue un préjudice généré par l'attaque et subi par la machine virtuelle. C'est l'effet perceptible de l'attaque au niveau de la machine virtuelle. Le module de supervision des performances ms1, ms2, ms3, etc. est paramétré de manière à envoyer une alerte à l'entité de gestion de la sécurité locale VMsec au bout d'un temps donné de dégradation de la disponibilité des ressources. Par exemple, une telle dégradation de la disponibilité des ressources est observée lorsqu'un débit passe de 100 Mégaoctets à 95 Mégaoctets, pour un débit négocié à 100 Mégaoctets. L'entité de gestion de la sécurité VMsec, hébergée par le serveur hôte 10 est agencée pour gérer la sécurité au niveau du serveur hôte 10. L'entité de gestion de la sécurité VMsec est une machine virtuelle privilégiée apte à interagir avec l'hyperviseur 10-2 via la couche de gestion 10-3. Elle est un intermédiaire entre les applications qui s'exécutent sur les machines virtuelles VM1, VM2, VM3, etc., et l'hyperviseur 10-2. L'hyperviseur 10-2 n'est pas en mesure de percevoir une dégradation des performances d'une application qui s'exécute sur une machine virtuelle. En effet, l'hyperviseur 10-2 ne voit des machines virtuelles VM1, VM2, VM3, etc., que les ressources virtuelles qu'il met à leur disposition. Par ailleurs, l'entité de gestion de la sécurité VMsec est adaptée pour accéder à une base d'informations 12 qui comprend un ensemble de données représentatives de l'utilisation des ressources r1, r2, r3, r4, etc., par l'ensemble des machines virtuelles VM1, VM2, VM3, VMsec, etc., hébergées par le serveur hôte 10. La base d'informations 12 comprend par ailleurs, pour l'ensemble des machines virtuelles, des informations relatives à des mécanismes de gestion de contention des ressources qui peuvent être mis en oeuvre sur le serveur hôte 10. Ainsi, il identifie pour chaque machine, quel mécanisme a été activé, à quelle date, etc. La base d'informations 12 comprend donc, pour chaque machine virtuelle de l'architecture, toute information pertinente quant à l'utilisation de ressources, la mise en oeuvre de mécanismes spécifiques, etc. Les données de la base d'informations 12 sont collectées à intervalle régulier. La collecte des données de la base 12 est mise en oeuvre par l'hyperviseur 10-2, plus précisément par un module de collecte 10-21 de l'hyperviseur 10-2. Le module de collecte 10-21 est paramétrable. En particulier, l'intervalle de temps entre deux collectes relatives à une ressource est paramétrable. Ainsi, des collectes peuvent être effectuées plus ou moins souvent, suivant des intervalles de temps allant de quelques secondes à quelques minutes, en fonction de la ressource concernée et de sa criticité. De même, le stockage des données collectées est paramétrable et peut s'étaler sur une période de temps assez longue, pouvant s'étaler sur plusieurs mois, selon les besoins en traçabilité de l'architecture. Un tel mécanisme de collecte est connu et n'est pas plus détaillé ici.

L'architecture décrite en relation avec la figure 1 comprend un seul serveur hôte 10. L'invention n'est pas limitée à ce type d'architecture. Ainsi, dans un autre exemple de réalisation (non représenté), l'architecture comprend un ensemble des ressources organisées en grappe (le terme habituellement utilisé pour désigner cet ensemble de ressources est le terme anglais « cluster »). Le cluster regroupe un ensemble de serveurs hôtes. Chaque serveur hôte est adapté pour héberger une ou plusieurs machines virtuelles, conformément à l'architecture décrite précédemment.

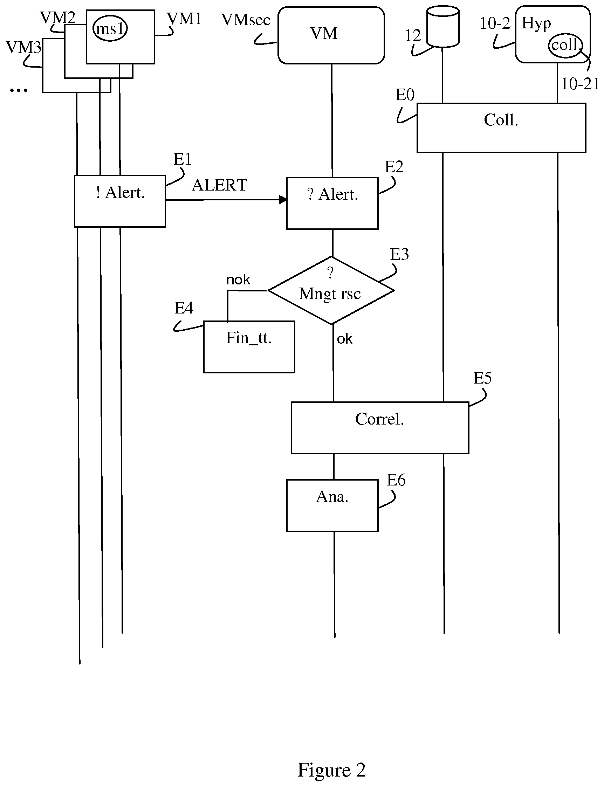

Les étapes d'un procédé de détection d'attaques, selon un premier exemple de réalisation, vont maintenant être décrites en relation avec la figure 2.

Le procédé est exécuté dans un environnement conforme à l'architecture décrite en relation avec la figure 1. Dans une phase préalable (non représentée sur la figure 2), des machines virtuelles VM1, VM2, VM3, etc., ainsi qu'une entité de gestion de la sécurité VMsec ont été créées et instanciées. Chaque machine virtuelle VM1, VM2, VM3, etc., met en oeuvre son propre mécanisme de supervision des performances au moyen d'un module de supervision des performances respectif ms1, ms2, ms3, etc. Dans une étape E0 de collecte, des données représentatives de l'utilisation des ressources du serveur hôte 10 par l'ensemble des machines virtuelles VM1, VM2, VM3, etc., et VMsec et de mécanismes de gestion de contention des ressources sont collectés dans la base d'informations 12 par le module de collecte 10-21 de l'hyperviseur 10-2. Cette étape E0 de collecte est une tâche récurrente, mise en oeuvre à intervalles réguliers dans l'architecture selon un paramétrage du module de collecte 10-21. Ainsi, des données telles que le temps d'utilisation du processeur, le nombre de pages mémoire utilisées, l'utilisation d'interfaces réseau, la consommation de disque, etc. sont collectées pour chacune des machines virtuelles de l'hôte 10 et enregistrées dans la base d'informations 12 en fonction d'un identifiant de machine virtuelle. Ainsi, la base d'informations 12 détaille pour chacune des machines virtuelles VM1, VM2, VM3, etc., le taux d'utilisation de chacune des ressources r1, r2, r3, r4, etc. mises à disposition des machines virtuelles par le serveur hôte 10. De même, des informations relatives à la mise en oeuvre au niveau d'une machine virtuelle d'un mécanisme de gestion de contention des ressources sont collectées.

Dans une étape suivante E1 d'alerte, le module de supervision des performances ms1 de la machine virtuelle VM1 détecte une dégradation des performances de la machine virtuelle VM1. Cette dégradation correspond à une dégradation de la disponibilité des ressources. Elle se traduit par exemple par une augmentation du temps de réponse d'une application qui s'exécute sur la machine virtuelle VM1, une diminution de la bande passante réseau utilisée par une application, une diminution du nombre d'instructions exécutées par secondes, etc. Le module de supervision des performances ms1 est paramétré de manière à émettre une alerte lorsque la dégradation des performances n'est plus acceptable. Une dégradation des performances n'est plus acceptable dès lors que les termes du contrat signé entre le client, qui exploite la machine virtuelle VM1, et le fournisseur de l'architecture, qui met à disposition du client la machine virtuelle VM1, stipulent un taux en pourcentage de disponibilité des ressources déterminé et que ce taux n'est pas respecté pendant un temps donné. Selon l'invention, cette dégradation des performances subie par une application de la machine virtuelle VM1 correspond potentiellement à un effet néfaste subi par la machine virtuelle VM1, et consécutif à une attaque sur une autre machine virtuelle. A ce stade, le module de supervision des performances ms1 ne peut pas identifier la ou les ressources à l'origine de la dégradation des performances. Il émet, au bout d'un temps déterminé une alerte ALERT à l'attention de l'entité de gestion de la sécurité VMsec. L'alerte ALERT peut être envoyée plus ou moins rapidement, selon la criticité de l'application, selon l'importance de la dégradation des performances, et la fréquence d'observation. Par exemple une application très critique peut émettre une alerte dès l'observation de la dégradation des performances, et une application peu critique au bout d'une dizaine de minutes, selon les termes du contrat. L'alerte ALERT comprend des informations telles que le temps écoulé entre la détection de la dégradation des performances et l'envoi de l'alerte, le type de dégradation observée, tel qu'une latence élevée, un débit moindre, ou un nombre d'instructions exécutées par seconde moindre, etc. Le temps écoulé est significatif d'un instant initial de l'observation d'un problème au niveau de la machine virtuelle VM1.

L'alerte ALERT est reçue par l'entité de gestion de la sécurité locale VMsec au cours d'une étape E2 de réception.

Dans une étape E3 de vérification, l'entité de gestion de la sécurité locale VMsec vérifie si l'alerte ALERT reçue du module de supervision des performances ms1 de la machine virtuelle VM1 est consécutive à un problème de partage de ressources entre les différentes machines virtuelles hébergées par le serveur hôte 10. Pour ce faire, l'entité de gestion de la sécurité VMsec vérifie qu'un mécanisme de gestion de contention des ressources au niveau du serveur hôte 10 a été activé sur la machine virtuelle VM1 dans l'intervalle de temps pendant lequel le mécanisme de supervision ms1 a observé la dégradation des performances, et a impacté la machine virtuelle VM1. Cet intervalle de temps a été fourni comme paramètre de l'alerte ALERT. A cette fin, la machine de gestion de la sécurité VMsec accède à la base d'informations 12. L'activation d'un mécanisme de gestion de contention des ressources au niveau d'une machine virtuelle figure parmi les informations collectées dans la base d'informations 12. Dans un autre exemple de réalisation, l'entité de gestion de la sécurité VMsec interroge la couche de gestion 10-3 pour obtenir cette information. Dans cet exemple de réalisation, c'est alors la couche de gestion 10-3 qui accède à la base d'informations 12 avant de répondre à la l'entité de gestion de la sécurité VMsec. La base d'informations 12 est adaptée pour mémoriser, pour chacune des machines virtuelles de l'architecture, des informations relatives à l'activation des mécanismes de gestion de contention des ressources : le mécanisme activé, la date à laquelle il a été activé, la ou les machine(s) virtuelle(s) qui a (ont) été impactée(s), etc.

Parmi les mécanismes de gestion de contention des ressources susceptibles d'avoir impacté les performances de la machine virtuelle VM1, on peut citer :
- Un gonflage de la mémoire de la machine virtuelle VM1 par un pilote de gonflage activé par l'hyperviseur 10-2. Des pages mémoire de la machine virtuelle VM1 sont ainsi récupérées par le pilote de gonflage activé par l'hyperviseur 11 en exerçant une pression de mémoire sur le système d'exploitation de la machine virtuelle VM1. Ainsi, lorsque le système d'exploitation de la machine virtuelle VM1 est sous contrainte de ressources du fait de la pression exercée par le pilote, le système d'exploitation de la machine virtuelle VM1 active ses propres algorithmes de gestion de la mémoire et en particulier, si nécessaire, permute des pages mémoire vers son propre disque virtuel. Ce mécanisme de gestion de la mémoire est plus connu sous le terme de mémoire virtuelle, ou « swap mémoire », ou « mémoire swap ». L'impact d'un tel mécanisme sur la machine virtuelle VM1 est une dégradation du temps d'accès aux données stockées en mémoire.
- Un swap mémoire au niveau de l'hyperviseur 10-2. Dans ce cas, il y a déplacement de pages mémoire de la machine virtuelle VM1 vers des zones mémoire de l'hyperviseur 10-2. Ce mécanisme peut conduire à une situation correspondant à un double swap mémoire : swap mémoire au niveau de la machine virtuelle VM1, après un swap mémoire de l'hyperviseur 10-2 sur la machine virtuelle VM1. Ce phénomène est plus connu sous le nom de «double paging ». L'impact d'un tel swap mémoire pour la machine virtuelle VM1 est une dégradation du temps d'accès aux données stockées en mémoire.
- Une migration de la machine virtuelle VM1 sur un autre serveur hôte (non représenté sur la figure 2). Le but d'une telle migration est de libérer des ressources qui ont été allouées initialement par le serveur hôte 10 à la machine virtuelle VM1. L'impact de la migration sur la machine virtuelle VM1 peut être une perte ponctuelle de connectivité durant une phase préalable à la migration, au cours de laquelle un contexte d'exécution de la machine virtuelle VM1 est généré et mémorisé (le terme anglais « down time » est habituellement utilisé), ainsi qu'une latence durant tout le temps de la migration de la machine virtuelle VM1. Une perte de connectivité, même très brève peut être inacceptable pour des machines virtuelles qui gèrent des applications et des données sensibles à la latence, telles que des applications de vidéo, des applications de jeu, etc.
- Une compression de la mémoire qui consiste à compresser des pages mémoires avant d'effectuer un swap mémoire. L'impact d'une telle compression est une dégradation des performances au niveau de la machine virtuelle VM1 qui, pour accéder à ces pages doit d'abord les décompresser.

Confronter l'alerte reçue du module de supervision des performances ms1 de la machine virtuelle VM1 à des données collectées au niveau du serveur hôte 10 est intéressant car la machine virtuelle VM1 n'a aucune visibilité sur des mécanismes mis en oeuvre par l'hyperviseur 10-2 à un niveau global de l'architecture, en l'espèce au niveau du serveur hôte 10. De même, l'hyperviseur 10-2 n'a aucune visibilité sur une dégradation de performances au niveau des applications de la machine virtuelle VM1, sa vue est en effet limitée à celle des ressources virtuelles qu'elle lui présente. L'établissement d'un lien de cause à effet entre l'activation d'un mécanisme de gestion de contention des ressources et une dégradation des performances subie par une machine virtuelle n'est donc pas immédiat.

Dans un premier cas (branche « nok » sur la figure 1), où aucun mécanisme n'a été activé sur la machine virtuelle VM1 à l'origine de l'alerte, alors, dans une étape E4 de fin de traitement, l'entité de gestion de la sécurité VMsec ignore l'alerte reçue de la machine virtuelle VM1. On entend par activation sur la machine virtuelle VM1 d'un mécanisme de gestion de contention des ressources, une mise en oeuvre du mécanisme par l'hyperviseur 10-2 qui a impacté la machine virtuelle VM1.

Dans un second cas (branche « ok » sur la figure 2), correspondant au cas où un mécanisme de gestion de contention des ressources du serveur hôte 10 a impacté la machine virtuelle VM1, l'entité de gestion de la sécurité locale VMsec recherche dans une étape E5 de détection de corrélations temporelles, au moins une corrélation temporelle entre la dégradation des performances observée sur la machine virtuelle VM1 et l'utilisation des ressources du serveur hôte 10 par les autres machines virtuelles VM2, VM3, etc., co-localisées avec la machine virtuelle VM1 sur le serveur hôte 10. En effet, dans ce cas, l'entité de gestion de la sécurité VMsec est assurée que la dégradation des performances observée par la machine virtuelle VM1 qui a produit l'alerte ALERT est due au partage de ressources avec d'autres machines virtuelles hébergées par le serveur hôte 10. Pour mettre en oeuvre cette recherche de corrélations temporelles, l'entité de gestion de la sécurité VMsec accède à la base d'informations 12 alimentée régulièrement conformément à l'étape E0 de collecte, et compare les historiques de consommation des ressources par les machines virtuelles co-localisées avec la machine virtuelle VM1 sur le serveur hôte 10 avec des informations contenues dans l'alerte ALERT. Cette comparaison est effectuée sur une fenêtre temporelle déterminée par l'entité de gestion de la sécurité VMsec. La fenêtre temporelle peut être une fenêtre temporelle fixe. Dans un autre exemple de réalisation, la fenêtre temporelle est fonction de l'alerte ALERT reçue au cours de l'étape E2, et est fonction par exemple de l'intervalle de temps qui sépare l'observation de la dégradation des performances de l'envoi de l'alerte ALERT. Cette recherche de corrélations temporelles a pour but d'identifier un ou des profils de consommation associé(s) à une ou plusieurs machines virtuelles VM2, VM3, etc., co-localisées avec la machine virtuelle VM1 sur l'hôte 10, et qui sont à l'origine du déclenchement du mécanisme de gestion de contention des ressources qui a provoqué la dégradation des performances observée sur la machine virtuelle VM1. Les machines virtuelles associées à ces profils de consommation identifiés sont donc à l'origine de l'émission de l'alerte reçue au cours de l'étape E1 d'alerte. Elles sont donc potentiellement à l'origine d'une attaque de l'architecture.

Ainsi, par exemple, lors de cette étape E5 de détection de corrélations temporelles par observation des données représentatives de l'utilisation des ressources, il est observé une augmentation de l'utilisation de la mémoire active sur une machine virtuelle donnée, parmi les machines virtuelles co-localisées avec la machine virtuelle VM1, par exemple la machine virtuelle VM2, en même temps qu'une activation par l'hyperviseur 10-2 d'un pilote de gonflage adapté pour récupérer de la mémoire de la machine virtuelle VM1 en exerçant une pression sur le système d'exploitation de la machine virtuelle VM1. Ainsi, dans cet exemple, une demande de mémoire plus élevée sur la machine virtuelle VM2 co-localisée avec la machine virtuelle VM1 coïncide avec un swap mémoire mis en oeuvre sur la machine virtuelle VM1. La machine virtuelle VM2 est donc potentiellement à l'origine d'une attaque de l'architecture.

Dans une étape suivante E6 d'analyse, une analyse de l'activité de la machine virtuelle VM2 pour laquelle une variation de l'utilisation des ressources du serveur hôte a été identifiée comme temporellement corrélée à la dégradation des performances observée sur la machine virtuelle VM1 est analysée en détail afin de confirmer un comportement d'attaque. Par exemple, une analyse détaillée de l'activité de la deuxième machine virtuelle VM2 peut montrer que l'activité à l'origine d'une demande supplémentaire de ressources est en fait consécutive à l'exécution d'instructions qui consomment du processeur mais ne font rien. Selon un deuxième exemple, l'analyse détaillée de l'activité de la deuxième machine virtuelle VM2 montre que ce même schéma de consommation de ressources est observable périodiquement. Il est vraisemblable qu'il s'agit d'une attaque par consommation de ressources dans un but malveillant. L'attaque est perpétrée à partir de la machine virtuelle VM2, soit par un utilisateur légitime de la machine virtuelle VM2, soit par un tiers qui en a pris le contrôle illégitimement.

Selon un autre exemple de réalisation, la détection de corrélations temporelles mise en oeuvre au cours de l'étape E5 identifie que plusieurs machines virtuelles co-localisées avec la machine virtuelle VM1 ont un profil de consommation des ressources à l'origine de l'activation du mécanisme de gestion de contention des ressources au niveau de la machine virtuelle VM1. L'analyse mise en oeuvre au cours de l'étape suivante E6 d'analyse montre alors que ces machines virtuelles ont un schéma de consommation des ressources étroitement lié, et ont concouru ensemble à engendrer un préjudice au niveau de la machine virtuelle VM1. Dans cet exemple, il y a collusion entre plusieurs machines virtuelles pour nuire à l'architecture. Il est vraisemblable qu'un tiers a pris illégitimement le contrôle des machines virtuelles impliquées dans le but de nuire à l'architecture.

Dans un autre exemple de réalisation dans lequel l'alerte fait suite à une perte de connectivité ponctuelle consécutive à une migration de la machine virtuelle VM1 sur un deuxième serveur hôte (non représenté), l'alerte est alors reçue par une deuxième entité de gestion de sécurité (non représentée) hébergée par le deuxième serveur hôte. Dans ce cas, la deuxième entité de gestion de sécurité locale ne dispose pas des données collectées sur le serveur hôte 10 et ne peut donc pas mener à bien la détection de corrélations entre l'alerte remontée par la machine virtuelle VM1 qui vient d'être migrée et l'activité des machines virtuelles colocataires de la machine virtuelle VM1 sur le serveur hôte 10. Dans ce cas, le procédé prévoit que la deuxième entité de gestion de sécurité transmette à l'entité de gestion de la sécurité VMsec du serveur hôte 10 les données de l'alerte ALERT afin que la détection de corrélation temporelle soit mise en oeuvre par l'entité de gestion de la sécurité VMsec du serveur hôte 10. En effet, le deuxième serveur hôte ne dispose pas de l'historique des profils de consommation de ressources des machines virtuelles co-localisées avec la machine virtuelle VM1 lors du déclenchement de la migration. En particulier, il ne dispose pas du profil de la machine virtuelle qui a provoqué la migration de la machine virtuelle VM1.

Dans l'exemple d'architecture en cluster décrit précédemment, l'entité de gestion de la sécurité VMsec, en charge de la mise en oeuvre du procédé de détection selon l'invention est localisée sur le premier serveur hôte. L'invention n'est pas limitée à ce type d'architecture. Ainsi, dans un autre exemple de réalisation, l'entité de gestion de la sécurité est une entité centralisée de l'architecture qui communique avec les couches virtuelles 10-4 des différents serveurs hôtes et qui reçoit notamment les alertes émises par les modules de supervision des performances de toutes les machines virtuelles de l'architecture. L'entité de gestion de la sécurité centralisée met alors en oeuvre une analyse à un niveau global de l'architecture. Une entité de gestion centralisée est avantageuse lorsqu'il est observé des migrations en cascade au cours desquelles la machine virtuelle VM1 est migrée d'un premier serveur hôte source vers un premier serveur hôte destination, puis rapidement migrée de ce premier serveur hôte destination vers un deuxième serveur hôte destination, etc. Dans ce cas, l'entité de sécurité centralisée qui reçoit l'ensemble des alertes de l'architecture est à même de corréler et d'analyser ces migrations en cascade.

Le procédé de l'invention concerne la détection d'attaques dans une architecture en cloud computing. Il trouve également une application intéressante dans une optimisation de l'architecture, notamment dans un but de placement optimisé de machines virtuelles dans l'architecture. En effet, le procédé de l'invention est également adapté pour détecter que des profils de consommation de ressources de différentes machines virtuelles sont incompatibles, c'est-à-dire que co-localiser ces machines virtuelles sur un même serveur hôte nuit à l'architecture en termes de performances. Par exemple, le procédé selon l'invention peut détecter qu'une première machine virtuelle dont le profil de consommation est fluctuant ne cohabite pas bien avec une machine virtuelle très sensible à la latence. Une machine virtuelle dont le profil de consommation est fluctuant est par exemple un serveur web qui atteint un pic de consommation des ressources à certaines heures de la journée, correspondant à une plage horaire où le nombre d'accès est plus important que la moyenne. Une machine virtuelle sensible à la latence correspond par exemple à une application vidéo. La cohabitation de ces deux machines virtuelles peut conduire à l'activation d'un mécanisme de gestion de contention des ressources détectée par le procédé de l'invention. La détection de corrélations temporelles, puis l'analyse mises en oeuvre par le procédé de l'invention permettent alors de préconiser que ces deux machines virtuelles ne soient pas placées sur le même serveur hôte, au moins pendant certaines plages horaires.

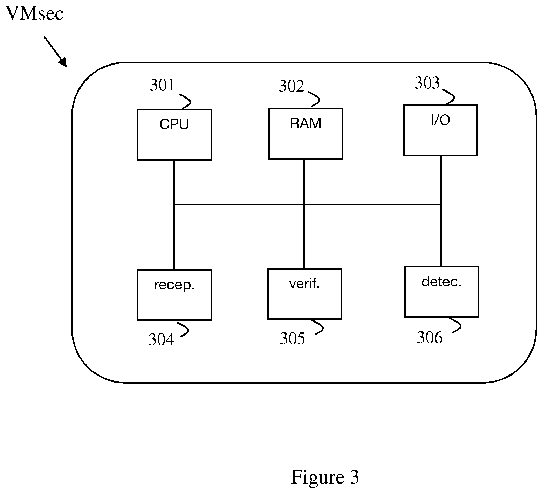

Une entité de gestion de la sécurité, selon un exemple de réalisation de l'invention va maintenant être décrite en relation avec la figure 3.

L'entité de gestion de la sécurité locale VMsec est conforme à une architecture d'équipement informatique tel qu'un terminal ou un serveur. Selon la modèle d'architecture décrit en relation avec la figure 1, l'entité de gestion de la sécurité VMsec est une machine virtuelle qui réside dans la couche virtuelle du serveur hôte 10 (le serveur hôte n'est pas représenté sur la figure 3). Elle comprend de manière classique :
- un microprocesseur 301, ou «CPU» (de l'anglais «Central Processing Unit »), destiné à charger des instructions en mémoire, à les exécuter, à effectuer des opérations,
- une ensemble de mémoires, dont une mémoire volatile 302, ou « RAM » (pour « Random Access Memory ») utilisée pour exécuter des instructions de code, stocker des variables, etc.,
- des interfaces de communication 303, agencées pour communiquer avec d'autres entités. En particulier, les interfaces 303 sont adaptées pour communiquer avec les autres machines virtuelles hébergées par le serveur hôte 10 et avec l'hyperviseur.

On comprend, au vu de la description du modèle en cloud computing fourni en relation avec la figure 1 que les ressources que possède l'entité de gestion de la sécurité VMsec, telles que la CPU, la mémoire sont des ressources du serveur hôte 10 virtualisées, mises à disposition de l'entité de gestion de la sécurité VMsec.

L'entité de gestion de la sécurité VMsec comprend également :
- des moyens de réception 304, agencés pour recevoir d'une machine virtuelle de la couche virtuelle une alerte représentative d'une dégradation des performances de ladite machine,
- des moyens de vérification 305, agencés pour vérifier qu'un mécanisme de gestion de contention des ressources a été mis en oeuvre pour la machine virtuelle. Les moyens de vérification 304 coopèrent avec les interfaces de communication 303 pour obtenir cette information du superviseur,
- des moyens de détection 306, agencés pour détecter, sur un intervalle de temps donné, au moins une corrélation temporelle entre la dégradation des performances survenue sur la machine virtuelle et une variation d'utilisation par au moins une autre machine virtuelle de la couche virtuelle, d'au moins une ressource du serveur hôte, des données représentatives de l'utilisation des ressources étant collectées à intervalles réguliers. Les moyens de détection 306 coopèrent avec les interfaces de communication 303 pour accéder à la base des données collectées sur l'utilisation des ressources par chacune des machines virtuelles de la couche virtuelle.

Les interfaces de communication 303, les moyens de réception 304, les moyens de vérification 305, les moyens de détection 306 sont de préférence des modules logiciels comprenant des instructions logicielles pour faire exécuter les étapes du procédé de détection d'attaques précédemment décrit.

L'invention concerne donc aussi :
- un programme d'ordinateur comportant des instructions pour la mise en oeuvre du procédé de détection d'attaques tel que décrit précédemment lorsque ce programme est exécuté par un processeur de l'entité de gestion de la sécurité VMsec,
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

L'entité de gestion de la sécurité VMsec est décrite ici comme une machine virtuelle du serveur hôte 10. Dans un autre exemple de réalisation où l'architecture comprend une pluralité de serveur hôte, l'entité de gestion de la sécurité peut être une entité centralisée.

L'invention porte également sur un système de détection d'attaques qui comprend un serveur hôte 10 qui héberge un ensemble de machines virtuelles, et une entité de gestion de la sécurité VMsec telle que décrite précédemment.

## Revendications

1. Procédé de détection d'attaques d'au moins une machine virtuelle dans un système comprenant au moins un serveur hôte (10) hébergeant un ensemble de machines virtuelles (VM1, VM2, VM3, ...), le procédé comprenant les étapes de :
- réception (E2) d'une alerte représentative d'une dégradation des performances au niveau d'une machine virtuelle,
- vérification (E3) qu'un mécanisme de gestion de contention des ressources a été mis en oeuvre pour la machine virtuelle par le serveur hôte,
- lorsqu'un mécanisme de gestion des contentions a été mis en oeuvre, détection (E5), sur un intervalle de temps donné, d'au moins une corrélation entre la dégradation des performances survenue sur la machine virtuelle et une variation d'utilisation par au moins une autre machine virtuelle, d'au moins une ressource du serveur hôte, ladite variation d'utilisation de la ressource étant obtenue par comparaison, sur une fenêtre temporelle, d'un historique de consommation de la ressource de la au moins une autre machine virtuelle avec des informations contenues dans l'alerte, des données représentatives de l'utilisation des ressources étant collectées à intervalles réguliers sur le serveur hôte, la au moins une autre machine étant à l'origine du déclenchement du mécanisme de gestion des contentions
- analyse (E6) afin de confirmer un comportement d'attaque.

2. Procédé selon la revendication 1, dans lequel l'étape d'analyse (E6) comprend une analyse de l'utilisation des ressources du serveur hôte par ladite autre machine virtuelle pendant l'intervalle de temps donné destinée à confirmer que l'autre machine virtuelle est à l'origine de la dégradation des performances au niveau de la machine virtuelle.

3. Procédé selon l'une des revendications précédentes dans lequel le mécanisme de gestion de contention des ressources appartient au groupe comprenant : un gonflage mémoire de la machine virtuelle par un pilote activé au niveau de la machine virtuelle par un hyperviseur (10-2) du serveur hôte, une compression de pages mémoires de la machine virtuelle, un déplacement d'au moins une page mémoire de la machine virtuelle vers des zones mémoire de l'hyperviseur, une migration de la machine virtuelle sur un deuxième serveur hôte.

4. Procédé selon la revendication 3 dans lequel, l'alerte étant consécutive à la migration de la machine virtuelle sur le deuxième serveur hôte, ladite alerte est transmise par une deuxième entité de gestion de la sécurité, hébergée par le deuxième serveur hôte.

5. Procédé selon l'une des revendications 1 à 4, incluant la détection d'une incompatibilité entre un profil de consommation des ressources de la machine virtuelle avec un profil de consommation des ressources d'une deuxième machine virtuelle hébergée par le serveur hôte.

6. Entité de gestion de la sécurité (VMsec) résidant dans une couche virtuelle sur un serveur hôte (10), l'entité de gestion de la sécurité comprenant :
- des moyens de réception (304), agencés pour recevoir d'une machine virtuelle de la couche virtuelle une alerte représentative d'une dégradation des performances de ladite machine,
- des moyens de vérification (305), agencés pour vérifier qu'un mécanisme de gestion de contention des ressources a été mis en oeuvre pour la machine virtuelle par le serveur hôte,
- des moyens de détection (306), agencés pour détecter, sur un intervalle de temps donné, lorsqu'un mécanisme de gestion des contentions des ressources a été mis en oeuvre, au moins une corrélation entre la dégradation des performances survenue sur la machine virtuelle et une variation d'utilisation par au moins une autre machine virtuelle, d'au moins une ressource du serveur hôte, ladite variation d'utilisation de la ressource étant obtenue par comparaison, sur une fenêtre temporelle, d'un historique de consommation de la ressource de la au moins une autre machine virtuelle avec des informations contenues dans l'alerte, des données représentatives de l'utilisation des ressources étant collectées à intervalles réguliers sur le serveur hôte, la au moins une autre machine étant à l'origine du déclenchement du mécanisme de gestion des contentions,
- des moyens d'analyse, agencés pour confirmer un comportement d'attaque.

7. Système de détection d'attaques comprenant :
- au moins un serveur hôte (10) hébergeant un ensemble de machines virtuelles, et
- une entité de gestion de la sécurité (VMsec) selon la revendication 6.

8. Programme d'ordinateur sur un support de données et chargeable dans la mémoire d'un ordinateur, le programme comprenant des portions de code pour l'exécution des étapes du procédé de détection d'attaques selon l'une quelconque des revendications 1 à 4 lorsque le programme est exécuté sur ledit ordinateur.

9. Support de données dans lequel est enregistré le programme selon la revendication 8.

## Patentansprüche

1. Verfahren zur Erfassung von Angriffen mindestens einer virtuellen Maschine in einem System, das mindestens einen Host-Server (10) enthält, in dem eine Einheit von virtuellen Maschinen (VM1, VM2, VM3, ...) untergebracht ist, wobei das Verfahren die folgenden Schritte enthält:
- Empfang (E2) einer Warnung, die für eine Verschlechterung der Leistungen im Bereich einer virtuellen Maschine repräsentativ ist,
- Überprüfung (E3), dass ein Konkurrenzverwaltungsmechanismus der Ressourcen für die virtuelle Maschine vom Host-Server angewendet wurde,
- wenn ein Verwaltungsmechanismus der Konkurrenzen angewendet wurde, Erfassung (E5), über einen gegebenen Zeitraum, mindestens einer Korrelation zwischen der Verschlechterung der Leistungen, die an der virtuellen Maschine aufgetreten ist, und einer Änderung der Benutzung, durch mindestens eine andere virtuelle Maschine, mindestens einer Ressource des Host-Servers, wobei die Benutzungsänderung der Ressource durch Vergleich, in einem Zeitfenster, eines Verbrauchsverlaufs der Ressource der mindestens einen anderen virtuellen Maschine mit in der Warnung enthaltenen Informationen erhalten wird, wobei für die Benutzung der Ressourcen repräsentative Daten in gleichmäßigen Zeitabständen im Host-Server gesammelt werden, wobei die mindestens eine andere Maschine der Ursprung der Auslösung des Verwaltungsmechanismus der Konkurrenzen ist,
- Analyse (E6), um ein Angriffsverhalten zu bestätigen.

2. Verfahren nach Anspruch 1, wobei der Schritt der Analyse (E6) eine Analyse der Benutzung der Ressourcen des Host-Servers durch die andere virtuelle Maschine während des gegebenen Zeitraums enthält, dazu bestimmt, zu bestätigen, dass die andere virtuelle Maschine der Ursprung der Verschlechterung der Leistungen im Bereich der virtuellen Maschine ist.

3. Verfahren nach einem der vorhergehenden Ansprüche, wobei der Konkurrenzverwaltungsmechanismus der Ressourcen zu der Gruppe gehört, die enthält: ein Speicheraufblähen der virtuellen Maschine durch einen Treiber, der im Bereich der virtuellen Maschine von einem Hypervisor (10-2) des Host-Servers aktiviert wird, eine Komprimierung von Speicherseiten der virtuellen Maschine, eine Verschiebung mindestens einer Speicherseite der virtuellen Maschine zu Speicherzonen des Hypervisors, eine Migration der virtuellen Maschine zu einem zweiten Host-Server.

4. Verfahren nach Anspruch 3, wobei, wenn die Warnung auf die Migration der virtuellen Maschine zum zweiten Host-Server folgt, die Warnung von einer zweiten Sicherheitsverwaltungsentität übertragen wird, die im zweiten Host-Server untergebracht ist.

5. Verfahren nach einem der Ansprüche 1 bis 4, das die Erfassung einer Inkompatibilität zwischen einem Verbrauchsprofil der Ressourcen der virtuellen Maschine und einem Verbrauchsprofil der Ressourcen einer im Host-Server untergebrachten zweiten virtuellen Maschine umfasst.

6. Sicherheitsverwaltungsentität (VMsec), die sich in einer virtuellen Schicht in einem Host-Server (10) befindet, wobei die Sicherheitsverwaltungsentität enthält:
- Empfangseinrichtungen (304), die eingerichtet sind, um von einer virtuellen Maschine der virtuellen Schicht eine Warnung zu empfangen, die für eine Verschlechterung der Leistungen der Maschine repräsentativ ist,
- Überprüfungseinrichtungen (305), die eingerichtet sind, um zu überprüfen, dass ein Konkurrenzverwaltungsmechanismus der Ressourcen für die virtuelle Maschine vom Host-Server angewendet wurde,
- Erfassungseinrichtungen (306), die eingerichtet sind, um über einen gegebenen Zeitraum, wenn ein Verwaltungsmechanismus der Konkurrenzen der Ressourcen angewendet wurde, mindestens eine Korrelation zwischen der Verschlechterung der Leistungen, die in der virtuellen Maschine aufgetreten ist, und einer Benutzungsänderung durch mindestens eine andere virtuelle Maschine, mindestens einer Ressource des Host-Servers zu erfassen, wobei die Benutzungsänderung der Ressource durch Vergleich, in einem Zeitfenster, eines Verbrauchsverlaufs der Ressource der mindestens einen anderen virtuellen Maschine mit in der Warnung enthaltenen Informationen erhalten wird, wobei für die Benutzung der Ressourcen repräsentative Daten in gleichmäßigen Zeitabständen im Host-Server gesammelt werden, wobei die mindestens eine andere Maschine der Ursprung des Auslösens des Verwaltungsmechanismus der Konkurrenzen ist,
- Analyseeinrichtungen, die eingerichtet sind, um ein Angriffsverhalten zu bestätigen.

7. Angriffserfassungssystem, das enthält:
- mindestens einen Host-Server (10), in dem eine Einheit von virtuellen Maschinen untergebracht ist, und
- eine Sicherheitsverwaltungsentität (VMsec) nach Anspruch 6.

8. Computerprogramm auf einem Datenträger und das in den Speicher eines Computers geladen werden kann, wobei das Programm Codeabschnitte zur Ausführung der Schritte des Verfahrens zur Erfassung von Angriffen nach einem der Ansprüche 1 bis 4 enthält, wenn das Programm auf dem Computer ausgeführt wird.

9. Datenträger, auf dem das Programm nach Anspruch 8 gespeichert ist.

## Claims

1. Method for detecting attacks on at least one virtual machine in a system comprising at least one host server (10) accommodating a set of virtual machines (VM1, VM2, VM3, ...), the method comprising the steps of:
- reception (E2) of an alert that is representative of a deterioration of performance on a virtual machine,
- verification (E3) that a resource contention management mechanism has been implemented for the virtual machine by the host server,
- when a contention management mechanism has been implemented, detection (E5), over a given time interval, of at least one correlation between the deterioration of performance that has occurred on the virtual machine and a variation in use, by at least one other virtual machine, of at least one resource of the host server, said variation in use of the resource being obtained by comparing, over a time window, a consumption history for the resource of the at least one other virtual machine with information contained in the alert, data that are representative of the use of the resources being collected at regular intervals on the host server, the at least one other machine being at the origin of the triggering of the contention management mechanism,
- analysis (E6) to confirm an attack behaviour.

2. Method according to Claim 1, in which the step of analysis (E6) comprises an analysis of the use of the resources of the host server by said other virtual machine over the given time interval, intended to confirm that the other virtual machine is at the origin of the deterioration of performance in the virtual machine.

3. Method according to either of the preceding claims, in which the resource contention management mechanism belongs to the group comprising: memory inflation for the virtual machine by a pilot that is activated on the virtual machine by a hypervisor (10-2) of the host server, compression of memory pages of the virtual machine, movement of at least one memory page of the virtual machine to memory areas of the hypervisor, migration of the virtual machine to a second host server.

4. Method according to Claim 3, in which, the alert resulting from the migration of the virtual machine on the second host server, said alert is transmitted by a second security management entity, accommodated by the second host server.

5. Method according to one of Claims 1 to 4, including the detection of an incompatibility between a consumption profile for the resources of the first virtual machine and a consumption profile for the resources of a second virtual that is machine accommodated by the host server.

6. Security management entity (VMsec) residing in a virtual layer on a host server (10), the security management entity comprising:
- reception means (304), which are designed to receive from a virtual machine of the virtual layer an alert that is representative of a deterioration of performance in said machine,
- checking means (305), which are designed to verify that a resource contention management mechanism has been implemented for the virtual machine by the host server,
- detection means (306), which are designed to detect, over a given time interval, when a resource contention management mechanism has been implemented, at least one correlation between the deterioration of performance that has occurred on the virtual machine and a variation in use, by at least one other virtual machine, of at least one resource of the host server, said variation in use of the resource being obtained by comparing, over a time window, a consumption history for the resource of the at least one other virtual machine with information contained in the alert, data that are representative of the use of the resources being collected at regular intervals on the host server, the at least one other machine being at the origin of the triggering of the contention management mechanism,
- analysis means, designed to confirm an attack behaviour.

7. System for detecting attacks comprising:
- at least one host server (10) accommodating a set of virtual machines,
- a security management entity (VMsec) according to Claim 6.

8. Computer program on a data storage medium and able to be loaded into the memory of a computer, the program comprising code portions for executing the steps of the method for detecting attacks according to any one of Claims 1 to 4 when the program is executed on said computer.

9. Data storage medium in which the program according to Claim 8 is recorded.
